# EUROPEAN PATENT APPLICATION

(11) **EP 0 764 513 A1**
(43) Date of publication of application: **26.03.1997**
(21) Application number: 96202403.0
(22) Date of filing: 29.08.1996
(51) Int. Cl.: B29C 45/42

(54) **Injection moulding apparatus for manufacturing hollow plastic articles**

(30) Priority: 29.08.1995 NL 1001087
(71) Applicant: INTER TOOLING SERVICES B.V., 7825 VG Emmen (NL)
(72) Inventor: Van Manen, Dirk, 7751 GM Dalen (NL); Albers, Hendrikus Johannes Theodorus, 7751 GK Dalen (NL)
(74) Representative: Smulders, Theodorus A.H.J., Ir.

(57) **Abstract**

An injection moulding apparatus for manufacturing hollow plastic articles, comprising a mould which comprises a first part (4) and a second part (6). The mould parts are each disposed on a machine plate (3,5) and the machine plates are movable along guide rods (8,9) extending transversely to the machine plates. The injection moulding apparatus further comprises a receiving device (14-16) with an arm which in open condition of the mould can be slid between the mould parts via a limited passage, for the purpose of receiving and removing moulded products. The receiving device comprises pivoting sections (16) comprising a number of receiving elements, and pivot control means, the effective width (C') of the receiving device being less in the pivoted position of the pivoting sections than in the non-pivoted position.

## Description

This invention relates to an apparatus for manufacturing hollow plastic articles, comprising a mould comprising a first part provided with a number of cavities and a second part provided with a number of cores, which cores in the closed position of the mould extend into the cavities for the purpose of forming an injection moulding cavity and in an open position of the mould are entirely clear of the cavities.

Such injection moulding apparatuses are used for manufacturing "preforms", as they are normally called in the relevant art, of plastic bottles or the like. To this end, in operation, in the closed condition of the mould, liquefied plastic, for instance PET, is injected into the space left clear between each core and the cavity into which the core reaches. After the mould cavities have thus been filled with plastic, the plastic in the cavity is held under pressure (afterpressure) for a short time to ensure a good product. After a cooling period the mould is then opened. In the opened condition of the mould, a receiving device for preforms, typically referred to as 'robot', is brought between the mould parts to take over the newly formed, still hot preforms and transfer them to a cooling station. Then the mould can be closed again and a new injection moulding cycle can be initiated.

Such an injection moulding apparatus comprises two machine plates arranged parallel to and opposite each other. The machine plates each carry one of the mould parts and are movable towards and away from each other for closing and opening the mould. Normally, one of the machine plates is arranged to be stationary and the other is arranged for reciprocating movement. Behind the stationary machine plate, usually a feeding device for liquid plastic, for instance an extruder or a storage cylinder, is arranged.

The machine plates are connected to each other through four guide rods or the like, along which the movable machine plate (or plates) can move towards the other machine plate (or plates) or away from the other machine plate (or plates). The guide rods are situated around mould parts, adjacent the four corner points of the machine plates.

The receiving device for the newly formed preforms comprises an arm, often called robot arm, provided with receiving elements which are positioned relative to each other in the same way as the cores and cavities of the mould and which in the opened position of the mould can be slid between the mould parts until the receiving elements are accurately in line with the preforms disposed in one of the mould halves, in order to take over the preforms and bring them outside the mould. The receiving elements can consist of shells if, upon opening of the mould, the preforms are left on the cores, or consist of cores if, upon opening of the mould, the preforms are left in the cavities.

The arm can be a plate-shaped member on which the shells or cores are mounted. The shells or cores can also be mounted on separate strip-shaped carriers, each corresponding with a row of mould cores or mould cavities and which in turn are themselves mounted on the plate-shaped member.

When the receiving elements are to be brought opposite the preforms, the robot arm is to be slid between and through two guide rods to a position between the mould parts.

A drawback of this configuration is that the mould, at least the nests of the mould, cannot extend outside the area defined by the free space between the two guide rods through which the robot arm is to pass. Accordingly, the distance between the guide rods directly determines the maximum dimensions of the mould and hence the maximum number of preforms that can be manufactured in a single injection moulding cycle.

The object of the invention is to obviate the drawback outlined. To that end, according to the invention, an injection moulding apparatus of the above-described type, in which the mould parts are each disposed on a machine plate and the machine plates are movable towards each other and away from each other along guide rods extending transversely to the machine plates, which injection moulding apparatus further comprises a receiving device with an arm provided with receiving elements, which in open condition of the mould can be slid between the mould parts via a passage limited by fixed structural members of the injection moulding apparatus, for the purpose of receiving and removing moulded products, is characterized in that the receiving device is provided with a number of sections capable of pivoting relative to the direction of movement of the receiving device and comprising a number of receiving elements, and with pivot control means, the effective width of the receiving device being less in the pivoted position of the pivoting sections than in the non-pivoted position, and the pivot control means being arranged for bringing the pivoting sections, when passing said passage, temporarily into the pivoted position.

Hereinafter the invention will be further described with reference to the accompanying drawing of an exemplary embodiment.
Fig. 1 schematically shows in side elevation an example of an injection moulding apparatus in which the invention can be used;
Fig. 2 schematically shows an elevation of one of the machine plates of the apparatus of Fig. 1, and a robot arm;
Figs. 3 and 4 and Fig. 5 schematically illustrate the principle of the invention in two variants.

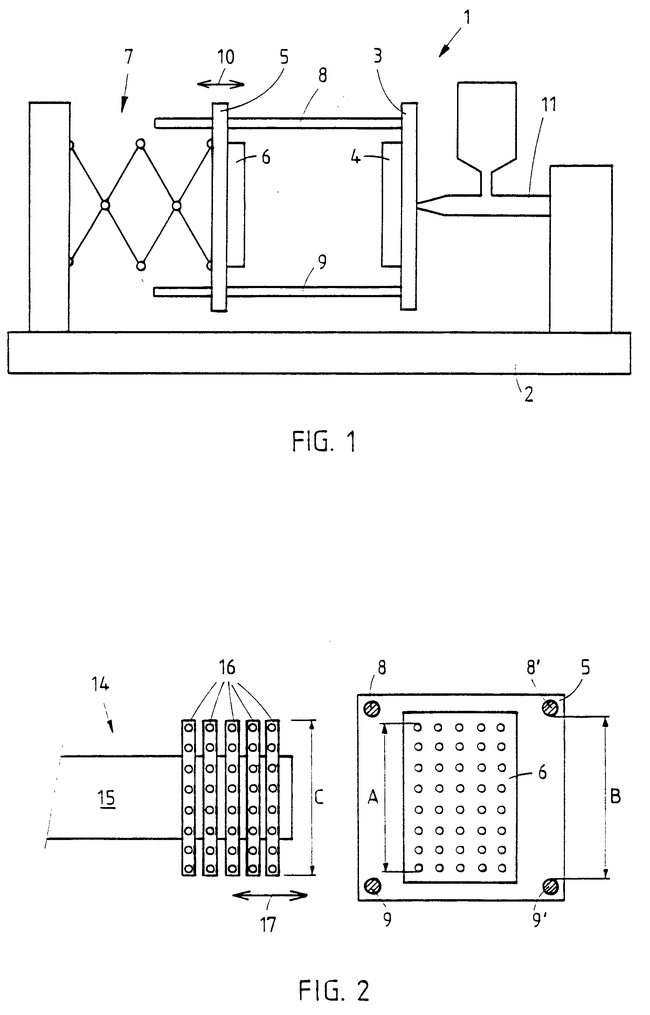

Fig. 1 schematically shows in side elevation an injection moulding apparatus 1 comprising a frame 2 with a stationary machine plate 3 fitted with a mould part 4 and a movable machine plate 5 fitted with a mould part 6. The machine plate 5 is connected to a driving mechanism 7, depicted only in outline, by means of which the machine plate 5 can be moved along the guide rods 8, 9 from and towards the opposite machine plate 3, as indicated with an arrow 10. The apparatus further comprises a feeding device 11 for liquid plastic, such as, for instance, an extrusion device. Although the receiving device for moulded preforms is not shown in Fig. 1, it will be clear that the robot arm can only be brought between the mould parts 4 and 6 if the mould is in the open position shown and if the robot arm can pass between the guide rods 8, 9.

All this has been clarified in Fig. 2. Fig. 2 shows an elevation of a machine plate, for instance machine plate 5 of Fig. 1 with mould part 6 and guide rods 8,8', 9,9'. In this example the mould has a matrix of five columns and eight rows of mould nests. The distance between the upper boundary of the uppermost row and the lower boundary of the lowermost row is indicated with A. The vertical distance between the upper guide rods 8, 8' and the lower guide rods 9, 9' is indicated with B.

Fig. 2 further shows schematically a robot arm 14, which in this example comprises a plate-shaped member 15, which is provided with a number of strips 16 with receiving elements for preforms. The receiving elements can for instance be shell-shaped and the strips 16 are then called shell strips. In Fig. 2, the receiving elements, like the nests of the mould, are depicted only schematically with dots. The strips extend transversely to the direction of movement of the robot arm 14, indicated with an arrow 17. The length of the strips is indicated with C. Each strip 16 corresponds with a row of mould nests of the mould. Accordingly, in the present example, the robot arm carries five strips 16.

As will appear from the drawing, the strips 16 can move through the guide rods 8 and 9 only if the length C of the strips is less than the distance B. Moreover, the distance A should then likewise be less than the distance B.

According to the invention, however, the distance A can yet be made greater than the distance B by causing the strips wholly or partly to assume a pivoted position as they pass the guide rods.

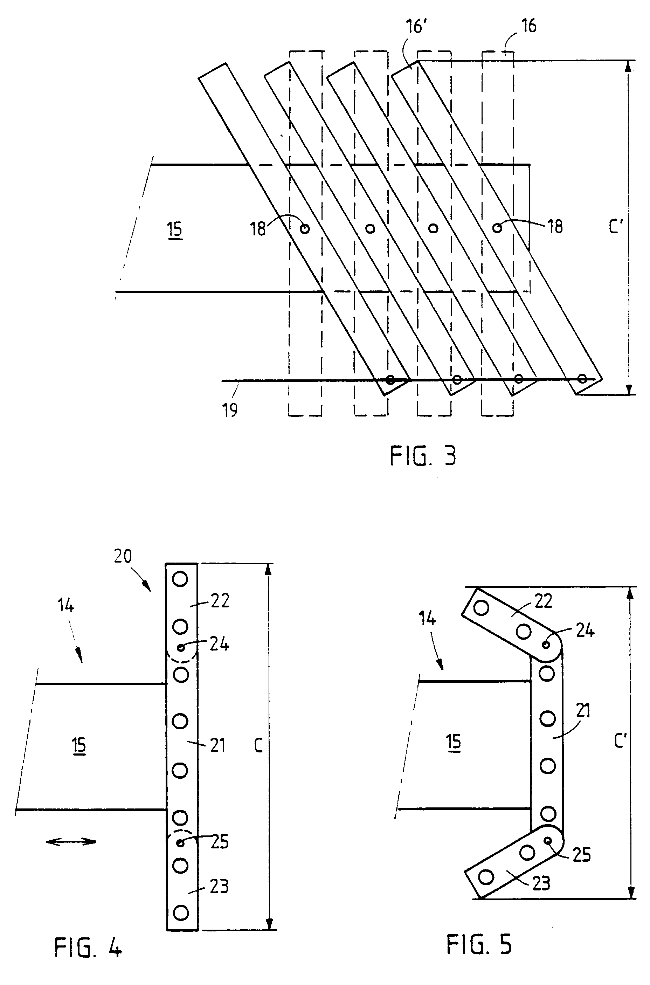

Fig. 3 shows a first possibility of seemingly shortening the length C of the strips 16. The strips 16 are each mounted on the robot arm for rotation about a pivot 18 located halfway the length of the strips. In Fig. 3, the normal position of the strips 16 is indicated with broken lines and the pivoted position 16' is indicated with solid lines. The apparent length C' of the strips in the pivoted position is shorter than the length C, so that the strips in the pivoted position require a smaller passage opening between the guide rods than do the strips in the normal position. During the movement of the robot arm, the strips are set in the pivoted position before reaching the guide rods and returned to the normal position again after passing the guide rods. So, given the same distance between the guide rods, the strips can be longer and hence the distance A can be greater, so that more mould nests can be used.

To arrange for the strips to be brought into and out of the pivoted position at the proper times, pivot control means are provided, symbolized in Fig. 3 by an operating rod 19, which is hingedly connected to at least one of the ends of the strips. The pivot control can be realized in different other ways obvious to those skilled in the art.

The central sections of the strips can be fixedly mounted on the plate 15 or even form part of the plate 15. In that case, the construction shown in Figs. 4 and 5 can be used, whereby the two ends of the strips extending beyond the plate 15 can pivot relative to the plate under the influence of suitable pivot control means.

Fig. 4 shows by way of example a robot arm 14 with a plate-shaped member 15 on which a single strip 20, which corresponds with the strips 16 of Fig. 2, is arranged. The strip 20 comprises a central section 21, which substantially coincides with the plate 15, or can even be a part thereof. The section 21 comprises at both ends a pivotally mounted pivoting piece 22, 23, which can pivot rearwards (as shown in Fig. 5) and/or forwards about pivots 24, 25. In this way, as with the embodiment of Fig. 3, the effective length C of the strips, that is, the effective width of the robot arm, can be reduced to the dimension C' as indicated in Fig. 5. The pivoting pieces 22, 23 can in turn be connected to suitable pivot control means, for instance an operating rod or the like, connected to the free ends.

It is noted that after the foregoing, various modifications will readily occur to those skilled in the art. For instance, it could be possible for the pivoting pieces 22 and 23 of Fig. 4 and Fig. 5 to pivot in different directions. Also, the pivoting direction could be different for the two directions of movement of the robot arm. Further, it is conceivable for the strips to be arranged asymmetrically on the robot arm, so that pivoting sections need to be arranged on one of the ends only.

Further, the invention is applicable with all types of injection moulding apparatuses where the width of the entry to the mould is limited by fixed means, such as the guide rods.

These and similar modifications are understood to fall within the framework of the invention.

## Claims

1. An injection moulding apparatus for manufacturing hollow plastic articles, comprising a mould which comprises a first part provided with a number of cavities and a second part provided with a number of cores, which cores in the closed position of the mould extend into the cavities for the purpose of forming an injection moulding cavity and in an open position of the mould are entirely clear of the cavities, while the mould parts are each disposed on a machine plate and the machine plates are movable towards each other and away from each other along guide rods extending transversely to the machine plates, which injection moulding apparatus further comprises a receiving device with an arm fitted with receiving elements, which in open condition of the mould can be slid between the mould parts via a passage limited by fixed structural members of the injection moulding apparatus, for the purpose of receiving and removing moulded products, **characterized in that** the receiving device is provided with a number of sections capable of pivoting relative to the direction of movement of the receiving device and comprising a number of receiving elements, and with pivot control means, the effective width of the receiving device being less in the pivoted position of the pivoting sections than in the non-pivoted position, and the pivot control means being arranged for bringing the pivoting sections, when passing said passage, temporarily into the pivoted position.

2. An injection moulding apparatus according to claim 1, **characterized in that** the receiving device comprises a number of substantially parallel strips fitted with receiving elements, which strips are capable of pivoting at least partly.

3. An injection moulding apparatus according to claim 2, **characterized in that** the strips are each mounted on a robot arm of the receiving device for pivoting movement about a central pivotal point.

4. An injection moulding apparatus according to claim 2, **characterized in that** the strips each have at least one free end, fitted with receiving elements, that is capable of pivoting relative to the rest of the strips.

5. A receiving device comprising pivoting sections and pivot control means for an injection moulding apparatus according to any one of the preceding claims.
